# EUROPEAN PATENT APPLICATION

(11) **EP 1 883 156 A2**
(43) Date of publication of application: **30.01.2008**
(21) Application number: 07012372.4
(22) Date of filing: 25.06.2007
(51) Int. Cl.: H02P 27/08, H02J 7/34

(54) **Motor driving apparatus**

(30) Priority: 26.07.2006 JP 2006203319
(71) Applicant: Fanuc Ltd, Minamitsuru-gun, Yamanashi 401-0597 (JP)
(72) Inventor: Matsubara, Shunsuke, Minamitsuru-gun Yamanashi 401-0302 (JP); Iwashita, Yasusuke, Fujiyoshida-shi Yamanashi 403-0003 (JP); Yamada, Yuuichi, Minamitsuru-gun Yamanashi 401-0511 (JP); Hanyu, Shigeki, Minamitsuru-gun Yamanashi 401-0511 (JP); Sakai, Koujirou, Minamitsuru-gun Yamanashi 401-0511 (JP)
(74) Representative: Thum, Bernhard

(57) **Abstract**

A motor driving apparatus includes a converter unit that converts alternating-current voltage supplied from an external power source into direct-current voltage, and a motor driving unit that receives direct-current power output from the converter unit and drives a motor. The motor driving apparatus stores direct-current power from the converter unit and regenerated power from the motor, and stores these power in a capacitor bank connected in series to a charging and discharging circuit. The capacitor bank connected in series to the charging and discharging circuit is integrated with a charging and discharging circuit optimum for a total capacitance of plural capacitors within the capacitor bank, thereby forming a module. One or more modules are provided corresponding to the capacitance required in the motor driving apparatus. Based on this configuration, the capability of the charging and discharging circuit and the capacitance of the capacitors are not limited by each other.

## Description

### BACKGROUND OF THE INVENTION

### 1. Field of the Invention

The present invention relates to a motor driving apparatus including a capacitor bank, which stores electric energy generated during motor regeneration and which reuses the stored electric energy to accelerate the motor.

### 2. Description of the Related Art

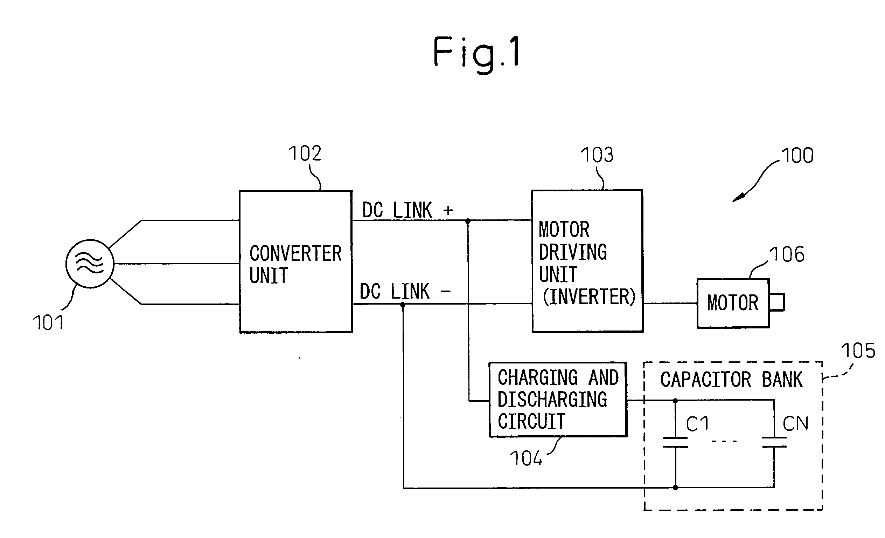

Fig. 1 is a schematic block configuration diagram of a motor driving apparatus according to a conventional technique. A motor driving apparatus 100 shown in Fig. 1 includes a converter unit 102 that converts three-phase alternating voltage supplied from an external power source 101 into direct-current voltage, and a motor driving unit 103 that receives the direct-current power output from the converter unit 102 and drives a motor 106. The motor driving apparatus receives the direct-current power from the converter unit 102 and regenerated power produced by the motor 106, and stores the direct current power and the regenerated power in a capacitor bank 105 connected in series to a charging and discharging circuit 104.

In the following explanation, connection points + and - between the converter unit 102 and the motor driving unit 103 of the motor driving apparatus 100 shown in Fig. 1 are called DC links + and -. When the capacitor bank 105 is directly connected between the DC links + and -, an excessive inrush current flows between capacitors C1 to CN within the capacitor bank 105 at the application of power. Therefore, it is necessary to limit the inrush current at the time of power application and connect the charging and discharging circuit 104 to the capacitor bank 105 to charge the capacitors C1 to CN within the capacitor bank 105.

According to Patent Document 1, a charging and discharging circuit, having capability corresponding to the maximum capacitance of a capacitor connected between the DC links + and - as shown in Fig. 1, is provided, and the capacitor is charged via the charging and discharging circuit. Therefore, when the capacitance of the capacitor is small, the charging and discharging circuit has an excessive capability. Specifically, a resistor constituting the charging and discharging circuit has a rated power which is higher than necessary. On the other hand, when the capacitance of the capacitor is desired to be increased, the capacitance of the capacitor is limited and cannot be increased to exceed the maximum capability of the charging and discharging circuit, because the maximum capacitance of the capacitor is determined by the maximum capability of the charging and discharging circuit. Specifically, the maximum capacitance of the capacitor is determined corresponding to the rated power of the resistor constituting the charging and discharging circuit, and the capacitance of the capacitor cannot exceed the maximum capacitance corresponding to the maximum capability of the charging and discharging circuit. Therefore, when the capacitance of the capacitor is desired to be increased, the resistor needs to be changed to a one having a large power rating.

[Patent Document 1] Japanese Patent Publication No. 2003-333891 (see claim 1, claim 7, claim 8 in scope of claim for a patent, and paragraph numbers 0009 and 0010 in the specification, and Fig. 1).

As described above, the motor driving apparatus described in Patent Document 1 has a problem in that the capability of the charging and discharging circuit and the capacitance of the capacitor are mutually limited.

### SUMMARY OF THE INVENTION

Therefore, the present invention has an object of providing a motor driving apparatus which is configured such that the capability of the charging and discharging circuit and the capacitance of the capacitor are not mutually limited.
A motor driving apparatus according to the present invention achieving the above object includes a converter unit that converts alternating-current voltage supplied from an external power source into direct-current voltage, and a motor driving unit that receives direct-current power output from the converter unit and drives a motor. The motor driving apparatus stores direct-current power from the converter unit and regenerated power from the motor in a capacitor bank connected in series to a charging and discharging circuit. In this motor driving apparatus, the capacitor bank connected in series to the charging and discharging circuit is integrated with a charging and discharging circuit optimum for the capacitance of the capacitor bank, thereby forming a module. One or more modules are provided corresponding to the capacitance required in the motor driving apparatus.

In the motor driving apparatus, a plurality of N of modules are connected in series corresponding to a voltage output from the converter unit.

In the motor driving apparatus, the charging and discharging circuit includes a diode or a switch that passes discharge current from the capacitor bank to the motor driving unit, and a resistor that limits charging current to the capacitor within the capacitor bank, the diode or switch, and the resistor being connected in parallel.

In the motor driving apparatus, the charging and discharging circuit includes a diode or switch that passes discharge current from the capacitor bank to the motor driving unit, and a semiconductor element and an inductor connected in series to limit charging current to the capacitor within the capacitor bank, the diode or switch, and the semiconductor element and the inductor being connected in parallel.

In the motor driving apparatus, the module includes a circuit that controls voltage applied to the capacitor within the capacitor bank, between the charging and discharging circuit and the capacitor bank.

According to the above motor driving apparatus, a necessary number of modules are connected to the driving apparatus in a module unit, each module being integrated with a capacitor within the capacitor bank and with the charging and discharging circuit having an optimum capacitance for the capability of the capacitor. Therefore, the capability of the charging and discharging circuit and the capacitance of the capacitor are not limited by each other.

In the above module driving apparatus, according to the configuration of the module including a circuit which controls the voltage of the capacitor, energy stored in the capacitor can be effectively used. For example, when the circuit that controls the voltage of the capacitor boosts the voltage, energy charged to the capacitor is increased and supplied to the motor driving unit.

### BRIEF DESCRIPTION OF THE DRAWINGS

Fig. 1 is a schematic configuration diagram of a motor driving apparatus according to a conventional technique.
Fig. 2 is a circuit diagram of a module according to the present invention.
Fig. 3 is a circuit diagram depicting plural modules connected in parallel, shown in Fig. 2.
Fig. 4 is a circuit diagram depicting plural modules connected in series, shown in Fig. 2.
Fig. 5 is a circuit diagram showing a charging and discharging circuit that charges electric energy into capacitors within a capacitor bank constituting the module shown in Fig. 2 and that discharges the stored electric energy to a motor driving unit, according to the first embodiment.
Fig. 6 is a circuit diagram showing a charging and discharging circuit that charges electric energy into capacitors within a capacitor bank constituting the module shown in Fig. 2 and that discharges the stored electric energy to a motor driving unit, according to the second embodiment.
Fig. 7 is a circuit diagram showing a charging and discharging circuit that charges electric energy into capacitors within a capacitor bank constituting the module shown in Fig. 2 and that discharges the stored electric energy to a motor driving unit, according to the third embodiment.
Fig. 8 is a circuit diagram showing a charging and discharging circuit that charges electric energy into capacitors within a capacitor bank constituting the module shown in Fig. 2 and that discharges the stored electric energy to a motor driving unit, according to the fourth embodiment.
Fig. 9 depicts a voltage control circuit and a discharging circuit provided between the charging and discharging circuit and the capacitor bank of the module shown in Fig. 2.

### DESCRIPTION OF THE PREFERRED EMBODIMENTS

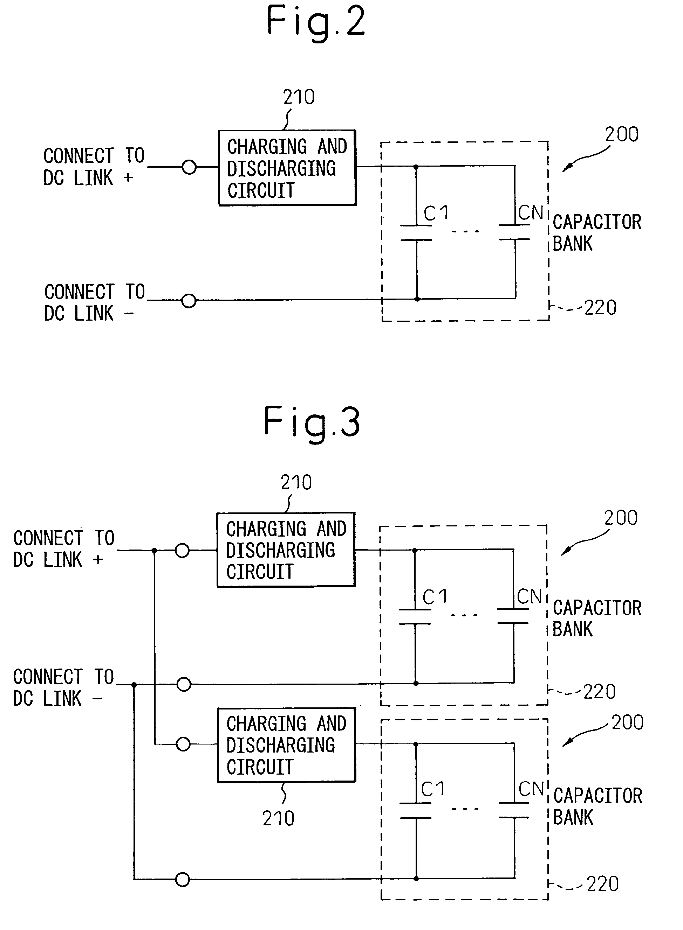

Fig. 2 is a circuit diagram of a module according to the present invention, and Fig. 3 is a circuit diagram depicting plural modules connected in parallel, shown in Fig. 2. A module 200 shown in Fig. 2 is integrated with a charging and discharging circuit 104 (210 in Fig. 2) of the motor driving apparatus 100 and with a capacitor bank 105 (220 in Fig. 2).

The capacitor bank 220 is connected in series to the charging and discharging circuit 210 shown in Fig. 2. The module 200 is integrated with a charging and discharging circuit 210, optimum for a total capacitance C of the capacitors C1 to CN within the capacitor bank 220, and with the capacitor bank 220. One module 200 is provided as shown in Fig. 2, and a plural number N of modules are connected in parallel, as shown in Fig. 3, corresponding to a capacitance (electric energy) E required by the motor driving apparatus 100. In this case, the total capacitance C of the capacitors C1 to CN is calculated by E=CV²/2, where V represents voltage at both ends of the capacitor. When the total capacitance C of the capacitors C1 to CN is determined by E=CV²/2, the rated power of the resistor within the charging and discharging circuit 210 is selected to accord with the electric energy E.

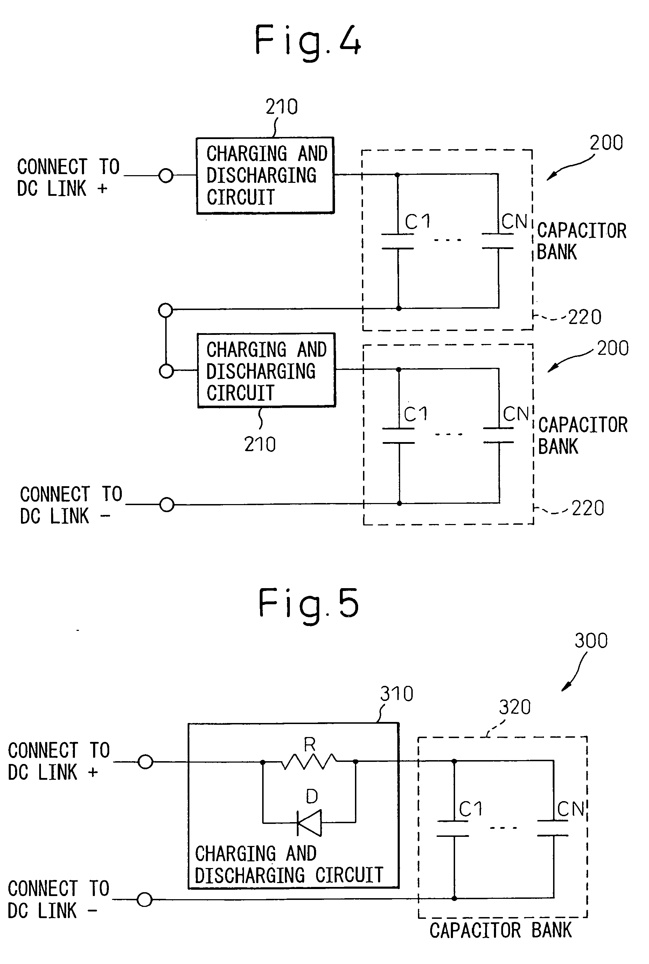

Fig. 4 is a circuit diagram depicting a series connection of two modules 200 shown in Fig. 2, in which the two modules 200 are connected in series in the example shown in Fig. 4, three or more modules 200 can be also connected in series.

Fig. 5 is a circuit diagram showing a charging and discharging circuit 310 that charges electric energy into the capacitors C1 to CN within a capacitor bank 320 constituting the module 200 (300 in Fig. 5) shown in Fig. 2, and discharges the stored electric energy to a motor driving unit, according to the first embodiment. In charging electric energy to the capacitors C1 to CN, the energy is charged via a resistor R. In discharging the electric energy from the capacitors C1 to CN, current is passed via the diode D.

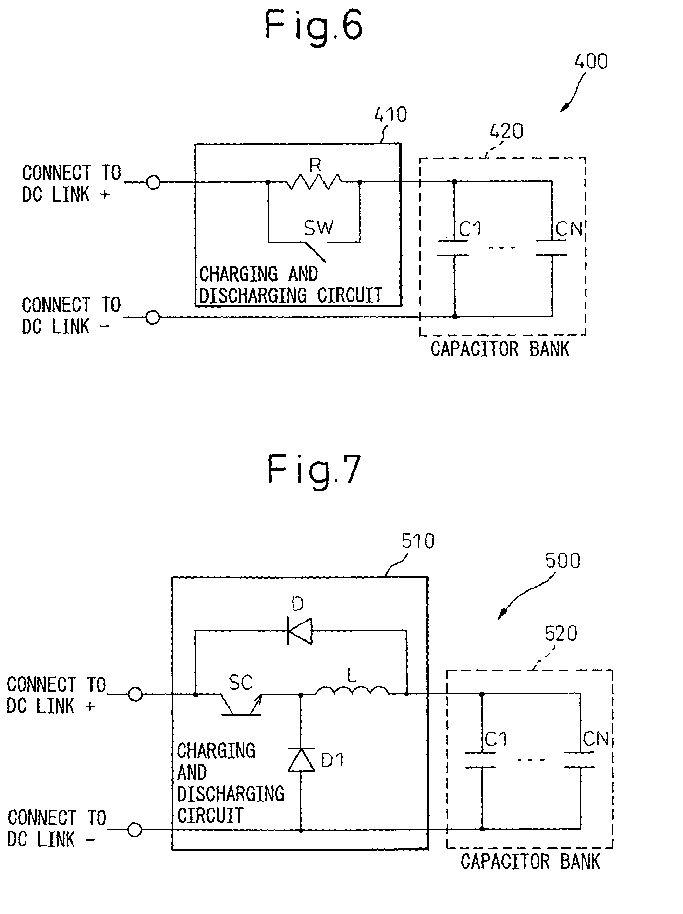

Fig. 6 is a circuit diagram showing a charging and discharging circuit 410 that charges electric energy into the capacitors C1 to CN within a capacitor bank 420 constituting the module 200 (400 in Fig. 6) shown in Fig. 2 and that discharges the stored electric energy to a motor driving unit, according to the second embodiment. In charging electric energy to the capacitors C1 to CN, the energy is charged via the resistor R. In discharging the electric energy from the capacitors C1 to CN, current is passed via a switch SW, such as a transistor.

Fig. 7 is a circuit diagram showing a charging and discharging circuit 510 that charges electric energy into the capacitors C1 to CN within a capacitor bank 520 constituting the module 200 (500 in Fig. 7) shown in Fig. 2, and discharges the stored electric energy to a motor driving unit, according to the third embodiment. In charging electric energy to the capacitors C1 to CN, the energy is charged via an inductor L and a semiconductor SC, for example, a transistor. In discharging the electric energy from the capacitors C1 to CN, current is passed via the diode D. The diode D1, connected as shown in Fig. 7, returns energy stored in the inductor L when the semiconductor SC is off.

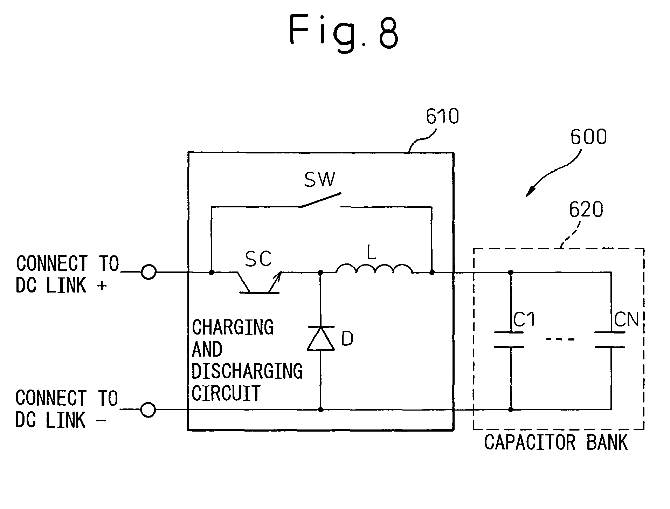

Fig. 8 is a circuit diagram showing a charging and discharging circuit 610 that charges electric energy into the capacitors C1 to CN within a capacitor bank 620 constituting the module 200 (600 in Fig. 8) shown in Fig. 2 and discharges the stored electric energy to a motor driving unit, according to the fourth embodiment. In charging electric energy to the capacitors C1 to CN, the energy is charged via the inductor L and the semiconductor SC such as a transistor. In discharging the electric energy from the capacitors C1 to CN, current is passed via the switch SW, such as a transistor. The diode D, connected as shown in Fig. 8, returns energy stored in the inductor L when the semiconductor SC is off.

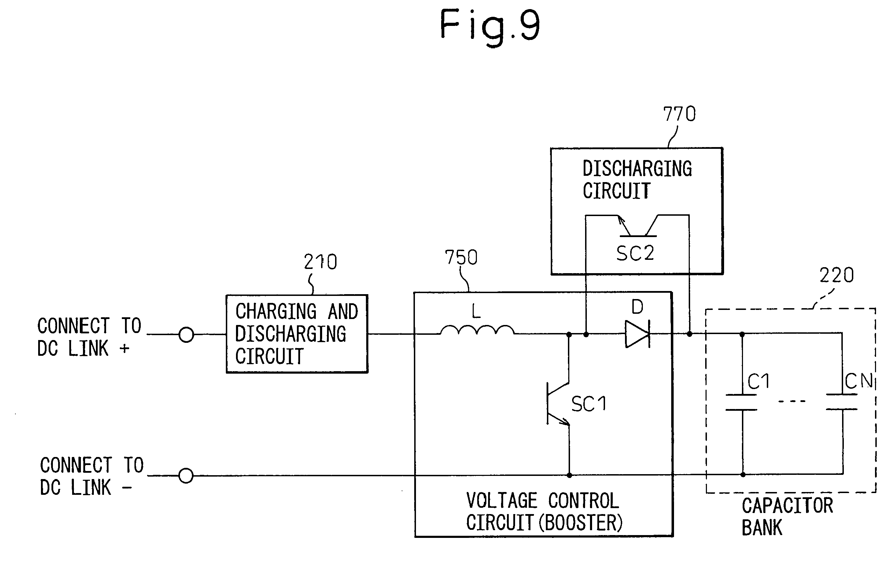

Fig. 9 depicts a voltage control circuit 750 and a discharging circuit 770 provided between the charging and discharging circuit 210 and the capacitor bank 220 of the module 200 shown in Fig. 2. The voltage control circuit 750 includes the inductor L, a first semiconductor (for example, a transistor) SC1, and diode D. The discharging circuit 770 includes a second semiconductor (for example, a transistor) SC2.

The voltage control circuit 750 is what is called a booster circuit. When the first semiconductor SC1 is turned on, the voltage control circuit 750 stores electric energy in the inductor L1. When the first semiconductor SC1 is turned off, the voltage control circuit 750 charges the electric energy stored in the inductor L1 into the capacitors C1 to CN within the capacitor bank 220 via the diode D, thereby boosting voltages between the capacitors C1 to CN. The diode D prevents the electric energy, charged to the capacitors C1 to CN within the capacitor bank 220, from flowing back to the voltage control circuit 750. The discharging circuit 770 discharges the electric energy, charged to the C1 to CN within the capacitor bank 220, to the motor driving unit shown in Fig. 1 via the second semiconductor SC2.

## Claims

1. A motor driving apparatus comprising a converter unit that converts alternating-current voltage supplied from an external power source into direct-current voltage, and a motor driving unit that receives direct-current power output from the converter unit and drives a motor, the motor driving apparatus storing direct-current power from the converter unit and regenerated power from the motor, and storing the direct-current power and the regenerative power in a capacitor bank connected in series to a charging and discharging circuit, wherein
the capacitor bank connected in series to the charging and discharging circuit is integrated with a charging and discharging circuit optimum for the capacitor capacitance of the capacitor bank, thereby forming a module, and one or more modules are provided corresponding to the capacitance required in the motor driving apparatus.

2. The motor driving apparatus according to claim 1, wherein a plurality of N modules are connected in series corresponding to a voltage output from the converter unit.

3. The motor driving apparatus according to claim 1 or 2, wherein the charging and discharging circuit comprises a diode or a switch that passes discharge current from the capacitor bank to the motor driving unit, and a resistor that limits charging current to the capacitor within the capacitor bank, the diode or switch, and the resistor being connected in parallel.

4. The motor driving apparatus according to claim 1 or 2, wherein the charging and discharging circuit comprises a diode or switch that passes discharge current from the capacitor bank to the motor driving unit, and a semiconductor element and an inductor connected in series to limit charging current to the capacitor within the capacitor bank, the diode or switch, and the semiconductor element and the inductor being connected in parallel.

5. The motor driving apparatus according to any one of claims 1 to 4, wherein the module comprises a circuit that controls voltage applied to the capacitor within the capacitor bank, between the charging and discharging circuit and the capacitor bank.
